# EUROPÄISCHE PATENTSCHRIFT

(11) **EP 1 134 261 B1**
(45) Veröffentlichungstag und Bekanntmachung des Hinweises auf die Patenterteilung: **04.05.2011**
(21) Anmeldenummer: 01106209.8
(22) Anmeldetag: 14.03.2001
(51) Int. Cl.: C09C 1/56

(54) **Russ**
Carbon black
Suie

(30) Priorität: 16.03.2000 DE 10012783
(43) Veröffentlichungstag der Anmeldung: 19.09.2001
(73) Patentinhaber: Evonik Carbon Black GmbH, 63457 Hanau (DE)
(72) Erfinder: Bergemann, Klaus, Dr., 50170 Kerpen-Sindorf (DE); Fanghänel, Egon, Prof. Dr., 06114 Hall/S. (DE); Lüthge, Thomas, 63454 Hanau (DE); Vogel, Karl, Dr., 63755 Alzenau-Michelbach (DE)

(56) Entgegenhaltungen:
- WO-A-00/05313
- DE-A- 19 738 368
- PATENT ABSTRACTS OF JAPAN vol. 2000, no. 02, 29. Februar 2000 (2000-02-29) -& JP 11 315220 A (MINOLTA CO LTD), 16. November 1999 (1999-11-16)
- "Electrically conducting polyethylene composition - contg. carbon black modified with maleic anhydride to increase elasticity and strength, used in sheets, pipes, vessels etc. mfr" DERWENT, XP002211229

## Beschreibung

Die Erfindung betrifft einen Ruß, ein Verfahren zu seiner Herstellung sowie seine Verwendung.

Aus EP 0569503 ist ein Verfahren zur Oberflächenmodifizierung von kohlenstoffhaltigem Material mit aromatischen Gruppen durch elektrochemische Reduktion eines Diazoniumsalzes bekannt.

Es ist bekannt, Ruß mit organischen Gruppen zu versehen, indem man die organischen Gruppen mittels einer Diazoniumgruppe, die über das primäre Amin erzeugt wird, mit dem Ruß verknüpft (WO 96/18688).

Das bekannte Verfahren hat folgende Nachteile:
◆ Grundsätzlich ist eine Alkyl- oder bevorzugt Arylgruppe als Verbindungsgruppe erforderlich; die Modifizierung geschieht somit immer im größerem Abstand zur Rußoberfläche. Eine direkte Abschirmung der Rußoberfläche mit nah aufgebrachten polaren Gruppen ist unmöglich. Die Modifizierung läuft nicht in unmittelbarer Nähe der Oberfläche ab.
◆ Der Ruß ist mit Säuren und / oder Salzen verunreinigt. Neben dem eigentlichen Modifizierungsreagenz müssen überwiegend zusätzliche Säuren zur Einstellung des pH-Wertes eingesetzt werden. Diese Säuren werden nicht an den Ruß gebunden, sondern stellen eine Verunreinigung im Ruß dar oder müssen durch Reinigungsschritte entfernt werden.
◆ Die ebenfalls zur Diazotierung verwendbaren nichtionischen organischen Nitrite sind teilweise giftig und leicht brennbar.
   Reste der Nitrite (Gegenionen, Alkylreste) verbleiben ungebunden als Verunreinigung im Ruß.
◆ Zur Durchführung der Diazotierung ist der Einsatz von Nitrit in saurem Medium erforderlich. Dabei können sich giftige Stickstoffoxide bilden.
◆ Die Modifizierung mittels Diazoniumsalzen erfolgt überwiegend in wäßriger Phase. Aufgrund der hohen Verdampfungsenthalpie von Wasser ist die anschließend notwendige Trocknung mit großem Energieaufwand, also hohen Kosten verbunden.

Aus JP 11 315 220 sind Rußpigmente bekannt, die durch Cycloadditon von 1-Methylen-4,8-dioxaspiro[2.5]octan-, 4,8-Dioxaspiro [2.5]oct-1-en und/oder 2,3-Diazabicyclo-[2.2.1]hept-2-en-Derivate auf der Rußoberfläche hergestellt werden.

Aus SU 697533 ist die Modifizierung von Ruß mit Maleinsäureanhydrid bekannt.

Aufgabe der Erfindung ist es, einen Ruß mit organischen Gruppen zur Verfügung zu stellen, wobei
- die polaren Gruppen die Oberfläche direkt abschirmen,
- die Modifizierung des Rußes so variabel ist, daß die Gruppen direkt über der Oberfläche und / oder auch sehr weit entfernt sein können,
- die Modifizierung in unmittelbarer Nähe der Oberfläche abläuft,
- der resultierende Ruß nicht durch Säuren, Salze und ähnliches verunreinigt ist, sodass keine Reinigung des Rußes erforderlich ist,
- der Ruß nicht mit hohem Energieaufwand getrocknet werden muß,
- keine giftigen Abgase bei der Modifizierung entstehen,
- keine oder nur geringe Mengen leicht entfernbarer Lösemittel erforderlich sind,
- die Modifizierung ohne Lösungsmittel möglich ist.

Gegenstand der Erfindung ist ein Ruß mit organischen Gruppen, welcher dadurch gekennzeichnet ist, daß dieser erhältlich ist durch Umsetzung des Rußes mit C-C-Doppel- oder Dreifachbindung enthaltenden organischen Verbindungen, deren C-C-Doppel- oder Dreifachbindung durch mindestens einen Substituenten aktiviert ist und die organischen Verbindungen Verbindungen der Formel I 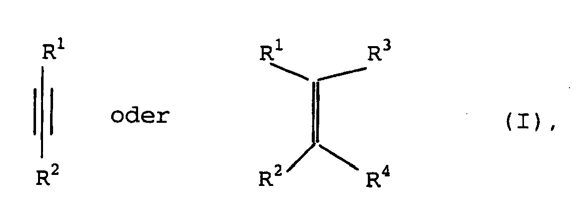 wobei R¹, R², R³ und R⁴ gleich oder verschieden sind,
mit R¹ = -COOR, -CO-R, -CN, -SO₂R, -SO₂OR ,
R², R³, R⁴ = R¹, H, Alkyl, Aryl, -COOM mit M = H⁺, Alkali⁺, Erdalkali⁺⁺, Cl und anderen nicht Akzeptorsubstituenten und
R = H, Alkyl, Aryl oder funktionalisiertes Alkyl oder Aryl,
oder Maleinsäureimide der allgemeinen Formel II 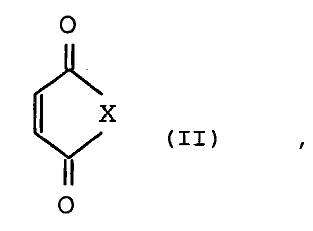 mit X = N-R⁵,
die funktionelle Gruppe R⁵ Alkyl, durch Y funktionalisiertes Alkyl, Polymere, cyclische organische Gruppen, Aryl, durch Y funktionalisiertes Aryl der Form Ar-Yₙ (n=1-5) mit
- Y=: -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, Trialkoxysilyl, Perfluoralkyl, R⁵, -NH₃⁺, - NR₃⁺, -SO₂-NR₂, -NO₂, -Cl, -CO-NR₂, -SS- oder -SCN, ist,
sind.

Als Ruß kann jeder bekannte Ruß, wie zum Beispiel Furnaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 19613796, oder metallhaltige Ruße, bekannt aus WO 98/42778, Lichtbogenruß und Ruße, die Nebenprodukte chemischer Produktionsprozesse sind, verwendet werden. Der Ruß kann durch vorgelagerte Reaktionen aktiviert werden. Es können Ruße, die als Verstärkerfüllstoff in Kautschukmischungen verwendet werden, eingesetzt werden. Es können Farbruße eingesetzt werden. Weitere Ruße können sein: Leitfähigkeitsruß, Ruß zur UV-Stabilisierung, Ruß als Füllstoff in anderen Systemen als Kautschuk, wie zum Beispiel in Bitumen, Kunststoff, Ruß als Reduktionsmittel in der Metallurgie.

Die primär aufgebrachten Gruppen können durch Folgereaktionen weiter modifiziert werden.

Ein weiterer Gegenstand der Erfindung ist ein Verfahren zur Herstellung des erfindungsgemäßen Rußes, welches dadurch gekennzeichnet ist, daß man Ruß mit C-C-Doppel- oder Dreifachbindung enthaltenden organischen Verbindungen, deren C-C-Doppel- oder Dreifachbindung durch mindestens einen Substituenten aktiviert ist und die organischen Verbindungen Verbindungen der Formel I 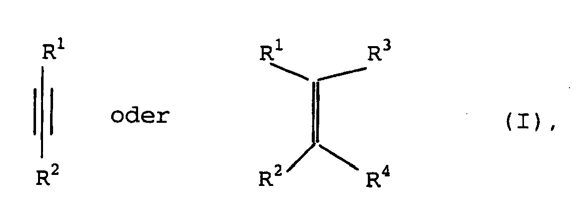 wobei R¹, R², R³ und R⁴ gleich oder verschieden sind,
mit R¹ = -COOR, -CO-R, -CN, -SO₂R, -SO₂OR ,
R², R³, R⁴ = R¹, H, Alkyl, Aryl, -COOM mit M = H⁺, Alkali⁺, Erdalkali⁺⁺, Cl und anderen nicht Akzeptorsubstituenten und
R = H, Alkyl, Aryl oder funktionalisiertes Alkyl oder Aryl,
oder Maleinsäureimide der allgemeinen Formel II 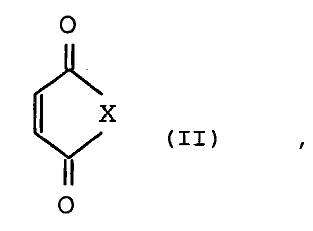 mit X = N-R⁵,
die funktionelle Gruppe R⁵ Alkyl, durch Y funktionalisiertes Alkyl, Polymere, cyclische organische Gruppen, Aryl, durch Y funktionalisiertes Aryl der Form Ar-Yₙ (n=1-5) mit
- Y=: -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, Trialkoxysilyl, Perfluoralkyl, R⁵, -NH₃⁺, - NR₃⁺, -SO₂-NR₂, -NO₂, -Cl, -CO-NR₂, -SS- oder -SCN, ist,
sind, umsetzt.

Als C-C-Doppel- oder Dreifachbindung enthaltenden organischen Verbindungen können alle Verbindungen eingesetzt werden, die geeignete Akzeptorsubstituenten zur Aktivierung der Mehrfachbindungen tragen.

Die Substituanten können dabei auf die potentiellen Anwendungsgebiete maßgeschneidert werden, da das gefundene Reaktionsprinzip sowohl die Einführung von hydrophilen, wie auch von lipophilen Resten gestattet.
Die Reste können auch ionisch, polymer oder für weitere Reaktionen reaktiv sein.

Die organische Gruppe R⁵ am Stickstoff kann:
- eine aliphatische Gruppe, eine cyclische organische Gruppe oder eine organische Verbindung mit einem aliphatischen und einem cyclischen Teil sein,
- substituiert oder unsubstituiert, verzweigt oder unverzweigt sein,
- eine aliphatische Gruppen umfassen, beispielsweise Reste aus Alkanen, Alkenen, Alkoholen, Ethern, Aldehyden, Ketonen, Carbonsäuren, Kohlenwasserstoffen,
- eine cyclische Verbindungen sein, beispielsweise alicyclische Kohlenwasserstoffe, wie zum Beispiel Cycloalkyle oder Cycloalkenyle, heterocyclische Verbindungen, wie zum Beispiel Pyrrolidinyl-, Pyrrolinyl-, Piperidinyl oder Morpholinyl, Arylgruppen, wie zum Beispiel Phenyl, Naphthyl oder Anthracenyl, und Heteroarylgruppen, wie zum Beispiel Imidazolyl,

Pyrazolyl, Pyridinyl, Thienyl, Thiazolyl, Furyl oder Indolyl,
- durch weitere funktionelle Gruppen substituiert sein,
- eine chromophore Gruppe oder ein Farbstoff sein,
- geeignete ungesättigte Verbindungen, wie zum Beispiel p-Benzochinon, Ethylvinylether oder Verbindungen mit Mehrfachbindungen, die Heteroatome in den Mehrfachbindungen enthalten, wie zum Beispiel Azidodicabensäureester sein.

Die organische Verbindung mit Akzeptorsubstituenten kann auf den Ruß aufgebracht werden durch Einmischen oder Aufsprühen. Die organische Verbindung mit Akzeptorsubstituenten kann als Pulver, Schmelze oder Lösung aufgebracht werden. Besonders vorteilhaft kann die Aufbringung der organischen Verbindung mit Akzeptorsubstituenten während der Rußherstellung sein, wobei die Zugabe der organischen Verbindung an einem Ort erfolgt, der die notwendige Temperatur aufweist.

Die Reaktion zur Modifizierung des Rußes kann vorzugsweise lösungsmittelfrei oder in einem Lösungsmittel, vorzugsweise leicht flüchtigen organischen Lösungsmittel, durchgeführt werden.

Die Reaktion zur Modifizierung des Rußes kann bei Temperaturen von 23° bis 250°C, vorzugsweise von 80° bis 140°C, durchgeführt werden.

Die erfindungsgemäßen Ruße mit organischen Gruppen können beispielsweise als Füllstoff, Verstärkerfüllstoff, UV-Stabilisator, Leitfähigkeitsruß oder Pigment in Kautschuk, Kunststoff, Druckfarben, Tinten, Inkjet-Tinten, Lacken und Farben, Bitumen, Beton und anderen Baustoffen oder Papier eingesetzt werden. Er kann als Reduktionsmittel in der Metallurgie verwendet werden.

Die erfindungsgemäßen Ruße weisen den Vorteil auf, daß
- polar modifizierte Ruße (zum Beispiel mit -S0₃- Gruppen) besser in polaren Systemen, vorrangig Wasser, dispergierbar sind,
- unpolar modifizierte Ruße (zum Beispiel mit Alkylgruppen) besser in unpolaren Systemen, wie zum Beispiel Ölen, zu dispergieren sind,
- geeignet modifizierte Ruße mit polaren oder sterischsperrigen Gruppen, in den Systemen elektrostatisch, beziehungsweise sterisch stabilisiert werden,
- nach dem erfindungsgemäßen Verfahren modifizierter Ruße, besser in Dispersionen stabilisiert sind und so bessere koloristische Eigenschaften, wie Farbtiefe und Blaustichigkeit, aufweisen,
- Ruße mit gebunden Farbstoffen veränderte Farbtöne aufweisen,
- Ruße mit weiterhin reaktiven Substituenten zur Kopplung und Vernetzung in Systemen (zum Beispiel Kautschuk), genutzt werden können,
- reaktiv modifizierte Ruße eine Anbindung des Rußes an das Polymer ermöglichen,
- Ruße dabei arm an Nebenprodukten, Salzen, Säuren und Feuchtigkeit hergestellt werden können.

### Beispiele

Die eingesetzten Ruße FW1, Printex 35 beziehungsweise Printex Alpha sind Produkte der Firma Degussa-Hüls AG. Der Ruß FW1 ist ein Gasruß mit einer BET-Oberfläche von 320 m²/g, der Ruß Printex 35 ist ein Furnaceruß mit einer BET-Oberfläche von 65 m²/g und einer DBP-Absorption von 42 ml/100 g und der Ruß Printex Alpha ist ein Furnaceruß mit einer BET-Oberfläche von 105 m²/g und einer DBP-Absorption von 100 ml/100 g (Pigmentruße Technische Daten, PT 10-32-3-898 OC, Degussa AG und TI 1196 "Printex alpha", Oktober 1998, Degussa AG).

### Vergleichsbeispiel 1:

### Modifizierung von Ruß in fester Phase mit Maleinsäureanhydrid

2 g Maleinsäureanhydrid werden in 150 ml Aceton gelöst, mit 10 g Ruß (FW1 beziehungsweise Printex 35) versetzt und 30 Minuten bei RT gerührt. Anschließend wird das Lösungsmittel im Vakuum abgezogen und der Ruß fünf Stunden im Muffelofen bei 180°C getempert.

Der resultierende Ruß trägt Carbonsäureanhydridgruppen.

### Vergleichsbeispiel 2:

### Modifizierung von Ruß in Toluol mit Maleinsäureanhydrid

### 2 g Maleinsäureanhydrid werden in 200 ml Toluol gelöst und mit 10 g Ruß (FW 1 beziehungsweise Printex 35) versetzt. Die Suspension wird vier bis 16 Stunden unter Rückfluß gekocht und danach abgesaugt, mit Toluol gewaschen und acht Stunden im Trockenschrank bei 105°C getrocknet.

Der resultierende Ruß trägt Carbonsäureanhydridgruppen.

### Vergleichsbeispiel 3:

### Basische Ringöffnungsreaktion und Neutralisation an mit Maleinsäureanhydrid modifiziertem Ruß zur Erzeugung von Carboxylatgruppen

10 g eines nach Vergleichsbeispiel 1, beziehungsweise Vergleichsbeispiel 2, modifizierten Rußes (FW 1 beziehungsweise Printex 35) werden zwei Stunden in 100 ml 1N KOH-Lösung gerührt. Danach wird die KOH-Lösung abgesaugt und der Filterrückstand solange mit Wasser gewaschen, bis der pH-Wert im neutralen Bereich liegt (pH ≈ 6-7). Der modifizierte Ruß wird anschließend acht Stunden bei 100 °C getrocknet. Der resultierende Ruß trägt Carboxylatgruppen.

### Beispiel 4:

### Umsetzung mit Maleinsäure und anschließende Neutralisation

2 g Maleinsäure werden in 100 ml Wasser gelöst. Zur Lösung gibt man 10 g Ruß (FW 1 beziehungsweise Printex 35) und kocht die Suspension zwei Stunden unter Rückfluß. Danach wird abgesaugt, der Filterrückstand mit 100 ml Wasser gewaschen und anschließend zwei Stunden in 100 ml 1N KOH-Lösung gerührt. Der Ruß wird abgesaugt und solange mit Wasser gewaschen, bis der pH-Wert im neutralen Bereich liegt. Anschließend wird acht Stunden bei 100 °C getrocknet. Der resultierende Ruß trägt Carboxylatgruppen.

### Beispiel 5:

### Umsetzung mit dem Monokaliumsalz der Acetylendicarbonsäure

2 g des Monokaliumsalzes der Acetylendicarbonsäure werden in 150 ml Wasser gelöst und zu der Lösung 10 g Ruß (FW 1 beziehungsweise Printex 35) gegeben. Die Suspension wird eine Stunde unter Rückfluß gekocht und anschließend abgesaugt. Der modifizierte Ruß wird danach mit 200 ml Wasser gewaschen und acht Stunden bei 100 °C getrocknet.
Der resultierende Ruß trägt Carboxyl- und Carboxylatgruppen.

### Beispiel 6

### Umsetzung mit Fumarsäure

2 g Fumarsäure werden in 150 ml Aceton suspendiert. Zur Suspension gibt man 10 g Ruß (FW 1 beziehungsweise Printex 35) und kocht zwei Stunden unter Rückfluß. Das Lösungsmittel wird danach im Vakuum abdestilliert und das Gemisch 48 Stunden auf 120 °C erhitzt. Der resultierende Ruß trägt Carboxylatgruppen.

### Beispiel 7:

### Modifizierung von Ruß mit dem Natriumsalz des N-(4-Sulfonatophenyl)-maleinsäureimids in fester Phase

2 g des Natriumsalzes des N-(4-Sulfonatophenyl)maleinsäureimids werden in 150 ml Wasser gelöst und mit 10 g Ruß (FW 1) versetzt. Das Wasser wird im Vakuum abdestilliert. Danach wird das Gemisch 5 Stunden auf 180 °C erhitzt. Der modifizierte Ruß wird danach mit 200 ml Wasser gewaschen und anschließend acht Stunden bei 100 °C getrocknet. Der resultierende Ruß trägt Natrumsulfonatgruppen.

### Beispiel 8

### Modifizierung von Ruß mit dem Natriumsalz des N-(4-Sulfonatophenyl)-maleinsäureimids in Wasser

2 g Natriumsalz des N-(4-Sulfonatophenyl)-maleihsäureimid werden in 100 ml gelöst, mit 10 g Ruß (FW 1) versetzt und 4 Stunden am Rückfluß erhitzt. Anschließend wird abgesaugt, mit Wasser gewaschen und acht Stunden im Trockenschrank bei 105°C getrocknet.

Der resultierende Ruß trägt Natriumsulfonatgruppen.

### Vergleichsbeispiel 9

### Modifizierung von Ruß mit N-(4-Sulfamoyl-phenyl)-maleinsäureamid in fester Phase

5 g N-(4-Sulfamoyl-phenyl)-maleinsäureamid werden in 250 ml Aceton gelöst, mit 25 g Ruß (FW 1 beziehungsweise Printex 35) versetzt und 30 Minuten bei RT gerührt. Anschließend wird das Lösungsmittel im Vakuum abgezogen und der Ruß fünf Stunden im Muffelofen bei 180°C getempert.

Der resultierende Ruß trägt Sulfonamidgruppen.

### Vergleichsbeispiel 10

### Modifizierung von Ruß mit N-Dodecyl-maleinsäureamid

2 g Maleinsäureamid N-Dodecyl-maleinsäureamid werden in 150 ml Toluol gelöst und mit 10 g Ruß (FW 1 beziehungsweise Printex Alpha) versetzt. Die Suspension wird vier Stunden unter Rückfluß gekocht und danach abgesaugt, mit Aceton gewaschen und im Trockenschrank bei 105°C acht Stunden getrocknet.

Der resultierende Ruß trägt Dodecylgruppen.

### Beispiel 11

### Dispersion von modifiziertem Ruß in Wasser

In einer Standarddispersion werden 15 Masse-% FW 1 auf 100 Teile Wasser mit 45 Masse-% (bezogen auf den Ruß) Hydropalat 3065 stabil dispergiert. Dazu wird erst 30 min bei 5000U/min mittels Ultra Turrax und anschließend 60 min im Ultraschall dispergiert.

Auf 100 Teile Wasser werden jedoch 15 Masse-% FW 1, der nach Beispiel 8 mit Sulfonatgruppen funktionalisiert ist, bereits mit nur 13 % Hydropalat 3065 stabil nach obigem Verfahren dispergiert.

Die Funktionalisierung des Rußes führt zu einer Verbesserung der Dispergiereigenschaften in wäßrigen Anwendungen.

Hydropalat 3065 ist ein Produkt der Henkel KGaA Düsseldorf und ist ein Netz-/Dispergiermittel.

## Patentansprüche

1. Ruß mit organischen Gruppen, **dadurch gekennzeichnet, daß** dieser erhältlich ist durch Umsetzung des Rußes mit C-C-Doppel- oder Dreifachbindung enthaltenden organischen Verbindungen, deren C-C-Doppel- oder Dreifachbindung durch mindestens einen Substituenten aktiviert ist und die organischen Verbindungen Verbindungen der Formel I 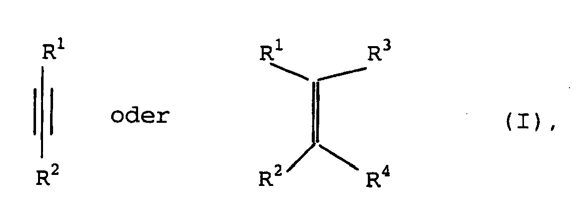 wobei R¹, R², R³ und R⁴ gleich oder verschieden sind,
mit R¹ = -COOR, -CO-R, -CN, -SO₂R, -SO₂OR ,
R², R³, R⁴ = R¹, H, Alkyl, Aryl, -COOM mit M = H⁺, Alkali⁺, Erdalkali⁺⁺, Cl und anderen nicht Akzeptorsubstituenten und
R = H, Alkyl, Aryl oder funktionalisiertes Alkyl oder Aryl,
oder Maleinsäureimide der allgemeinen Formel II 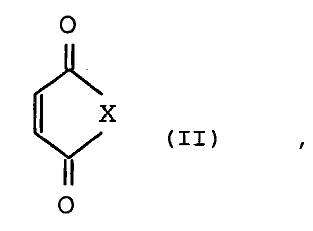 mit X = N-R⁵,
die funktionelle Gruppe R⁵ Alkyl, durch Y funktionalisiertes Alkyl, Polymere, cyclische organische Gruppen, Aryl, durch Y funktionalisiertes Aryl der Form Ar-Yₙ (n=1-5) mit
Y= -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, Trialkoxysilyl, Perfluoralkyl, R⁵, -NH₃⁺, - NR₃⁺, -SO₂-NR₂, -NO₂, -Cl, -CO-NR₂, -SS- oder -SCN, ist,
sind.

2. Verfahren zur Herstellung des Rußes nach Anspruch 1, **dadurch gekennzeichnet, daß** man Ruß mit C-C-Doppel- oder Dreifachbindung enthaltenden organischen Verbindungen, deren C-C-Doppel- oder Dreifachbindung durch mindestens einen Substituenten aktiviert ist und die organischen Verbindungen Verbindungen der Formel I 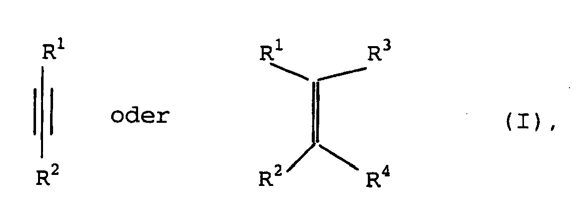 wobei R¹, R², R³ und R⁴ gleich oder verschieden sind,
mit R¹ = -COOR, -CO-R, -CN, -SO₂R, -SO₂OR ,
R², R³, R⁴ = R¹, H, Alkyl, Aryl, -COOM mit M = H⁺, Alkali⁺, Erdalkali⁺⁺, Cl und anderen nicht Akzeptorsubstituenten und
R = H, Alkyl, Aryl oder funktionalisiertes Alkyl oder Aryl,
oder Maleinsäureimide der allgemeinen Formel II 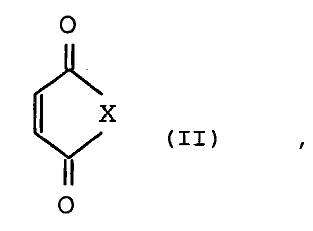 mit X = N-R⁵,
die funktionelle Gruppe R⁵ Alkyl, durch Y funktionalisiertes Alkyl, Polymere, cyclische organische Gruppen, Aryl, durch Y funktionalisiertes Aryl der Form Ar-Yₙ (n=1-5) mit
Y= -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, Trialkoxysilyl, Perfluoralkyl, R⁵, -NH₃⁺, - NR₃⁺, -SO₂-NR₂, -NO₂, -Cl, -CO-NR₂, -SS- oder -SCN, ist,
sind, umsetzt.

3. Verfahren zur Herstellung des Rußes gemäß Anspruch 2, **dadurch gekennzeichnet, daß** man die Modifizierung in einem Lösungsmittel oder ohne Lösungsmittel durchführt.

4. Verwendung des Rußes nach Anspruch 1 als Füllstoff, Verstärkerfüllstoff, UV-Stabilisator, Leitfähigkeitsruß oder Pigment in Kautschuk, Kunststoff, Druckfarben, Tinten, Inkjet-Tinten, Lacken und Farben, Bitumen, Beton und anderen Baustoffen oder Papier.

## Claims

1. Carbon black having organic groups, **characterized in that** it is obtainable by reacting the carbon black with organic compounds containing C-C double bond or triple bond therein being activated by at least one substituent, and the organic compounds being compounds of the formula I 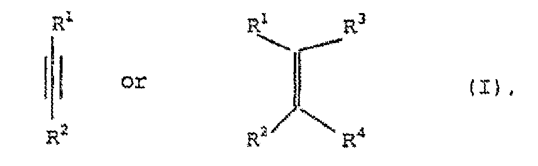 where R¹, R², R³ and R⁴ are identical or different, with R¹ = -COOR, -CO-R, -CN, -SO₂R, -SO₂OR,
R², R³, R⁴ = R¹, H, alkyl, aryl, -COOM with M = H⁺, alkali metal⁺, alkaline earth metal⁺⁺, Cl and other non-acceptor substituents, and
R = H, alkyl, aryl or functionalized alkyl or aryl,
or maleimides of the general formula II 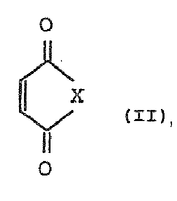 with x = N-R⁵, the functional group R⁵ is alkyl, alkyl functionalized by Y, polymers, cyclic organic groups, aryl, aryl functionalized by Y, of the form Ar-Yₙ (n = 1-5) where
Y = -OH, -SH, -SO₃H, -SO₃M, -B (OH) ₂, -O (CH₂-CH₂-O)ₙ-H, -COOH, -COOM, -NH₂, -NR₂, -N((CH₂-CH₂-O)ₙH)₂, CON((CH₂-CH₂-O)ₙH)₂, trialkoxysilyl, perfluoroalkyl, R⁵, -NH₃⁺, -NR₃⁺, -SO₂-NR₂, -NO₂, -Cl, -CO-NR₂, -SS- or -SCN.

2. Method for producing the carbon black according to Claim 1, **characterized in that** carbon black is reacted with organic compounds containing C-C double bond or triple bond therein being activated by at least one substituent, and the organic compounds being compounds of the formula I 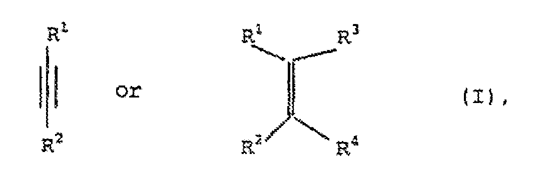 where R¹, R², R³ and R⁴ are identical or different, with R¹ = -COOR, -CO-R, -CN, -SO₂R, -SO₂OR,
R², R³, R⁴ = R¹, H, alkyl, aryl, -COOM with M = H⁺, alkali metal⁺, alkaline earth metal⁺⁺, Cl and other non-acceptor substituents, and
R = H, alkyl, aryl or functionalized alkyl or aryl,
or maleimides of the general formula II 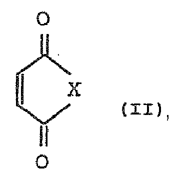 with X = N-R⁵, the functional group R⁵ is alkyl, alkyl functionalized by Y, polymers, cyclic organic groups, aryl, aryl functionalized by Y, of the form Ar-Yₙ (n = 1-5) where
Y = -OH, -SH, -SO₃H, -SO₃M, -B (OH) ₂, -O(CH₂-CH₂-O)ₙ-H, -COOH, -COOM, -NH₂, -NR₂, -N((CH₂-CH₂-O)ₙH) ₂, CON((CH₂-CH₂-O)ₙH)₂, trialkoxysilyl, perfluoroalkyl, R⁵, -NH₃⁺, -NR₃⁺, -SO₂-NR₂, -NO₂, -Cl, -CO-NR₂, -SS- or -SCN.

3. Method for producing the carbon black according to Claim 2, **characterized in that** the modification is carried out in a solvent or without solvent.

4. Use of the carbon black according to Claim 1 as filler, reinforcing filler, UV stabilizer, conductivity black or pigment in rubber, plastic, printing inks, liquid inks, inkjet inks, paints and varnishes, bitumen, concrete and other construction materials or paper.

## Revendications

1. Suie avec des groupes organiques, **caractérisée en ce qu'**elle peut être obtenue par transformation de la suie avec des composés organiques contenant une double liaison ou une triple liaison C-C, dont la double liaison ou triple liaison C-C est activée par au moins un substituant et les composés organiques sont des composés de formule I 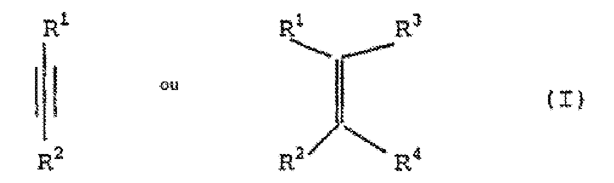 où R¹, R², R³ et R⁴ sont identiques ou différents, avec R¹ = -COOR, -CO-R, -CN, -SO₂R, -SO₂OR,
R², R³, R⁴ = R¹, H, alkyle, aryle, -COOM avec M = H⁺, métal alcalin⁺, métal alcalino-terreux⁺⁺, Cl et d'autres substituants non accepteurs et
R = H, alkyle, aryle, ou alkyle ou aryle fonctionnalisé,
et/ou des imides de l'acide maléique de la formule générale II 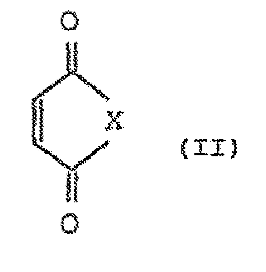 avec X = N-R⁵,
le groupe fonctionnel R⁵ représente alkyle, alkyle fonctionnalisé par Y, des polymères, des groupes organiques cycliques, aryle, aryle fonctionnalisé par Y de formule Ar-Yₙ (n = 1 - 5) avec
Y = -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, trialcoxysilyle, perfluoroalkyle, R⁵, -NH₃⁺, -NR₃⁺, -SO₂-NR₂, -NO₂, -Cl, -CO-NR₂, -SS- ou -SCN.

2. Procédé pour la production de la suie selon la revendication 1, **caractérisé en ce qu'**on transforme la suie avec des composés organiques contenant une double liaison ou une triple liaison C-C, dont la double liaison ou triple liaison C-C est activée par au moins un substituant et les composés organiques sont des composés de formule I 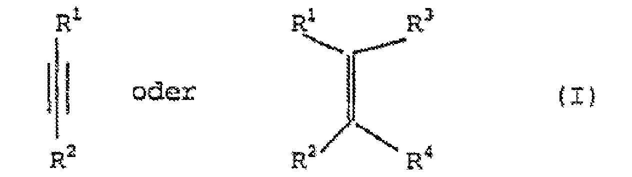 où R¹, R², R³ et R⁴ sont identiques ou différents, avec R¹ = -COOR, -CO-R, -CN, -SO₂R, -SO₂OR,
R², R³, R⁴ = R¹, H, alkyle, aryle, -COOM avec M = H⁺, métal alcalin⁺, métal alcalino-terreux⁺⁺, Cl et d'autres substituants non accepteurs et
R = H, alkyle, aryle, ou alkyle ou aryle fonctionnalisé,
et/ou des imides de l'acide maléique de la formule générale II 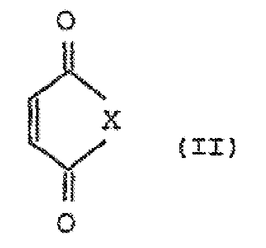 avec X = N-R⁵, le groupe fonctionnel R⁵ représente alkyle, alkyle fonctionnalisé par Y, des polymères, des groupes organiques cycliques, aryle, aryle fonctionnalisé par Y de formule Ar-Yₙ (n = 1 - 5) avec
Y = -OH, -SH, -SO₃H, -SO₃M, -B(OH)₂, -O(CH₂-CH₂-O)ₙ-H, -COOH, -COOM, -NH₂, -NR₂, -N((CH₂-CH₂-O)ₙH)₂, CON((CH₂-CH₂-O)ₙH)₂, trialcoxysilyle, perfluoroalkyle, R⁵, -NH₃⁺, -NR₃⁺, -SO₂-NR₂, -NO₂, -Cl, -CO-NR₂, -SS- ou -SCN.

3. Procédé pour la production de la suie selon la revendication 2, **caractérisé en ce qu'**on réalise la modification dans un solvant ou sans solvant.

4. Utilisation de la suie selon la revendication 1 comme charge, charge de renforcement, stabilisateur aux UV, suie conductible ou pigment dans le caoutchouc, matériau synthétique, encres d'imprimerie, encres pour procédés par jet d'encre, les laques et peintures, bitumes, béton et autres matériaux de construction ou papier.
